# EUROPEAN PATENT SPECIFICATION

(11) **EP 2 276 097 B1**
(45) Date of publication and mention of the grant of the patent: **04.06.2014**
(21) Application number: 09746594.2
(22) Date of filing: 12.05.2009
(51) Int. Cl.: H01M 10/05, H01M 2/08, H01M 2/02

(54) **LITHIUM ION BATTERY AND ELECTRODE WOUND BODY FOR LITHIUM ION BATTERY**
LITHIUMIONENBATTERIE UND ELEKTRODENWICKLUNGSELEMENT FÜR EINE LITHIUMIONENBATTERIE
PILE AU LITHIUM ION ET ENROULEMENT D'ÉLECTRODES POUR UNE PILE AU LITHIUM ION

(30) Priority: 13.05.2008 JP 2008126006
(43) Date of publication of application: 19.01.2011
(73) Proprietor: Kureha Corporation, Chuo-ku Tokyo 103-8552 (JP)
(72) Inventor: SUZUKI, Kazuyuki, Tokyo 103-8552 (JP); SUGAHARA, Mayumi, Tokyo 103-8552 (JP); YAMAMOTO, Junya, Tokyo 103-8552 (JP); KITAMURA, Hideki, Tokyo 103-8552 (JP); TERAMOTO, Yoshikichi, Tokyo 103-8552 (JP)
(74) Representative: Albrecht, Thomas
(86) International application number: PCT/JP2009/058849
(87) International publication number: WO 2009/139388

(56) References cited:
- EP-A2- 1 804 320
- JP-A- 1 304 172
- JP-A- 6 181 058
- JP-A- 6 181 058
- JP-A- 11 176 475
- JP-A- 2001 273 933
- JP-A- 2005 056 658
- JP-A- 2005 126 452
- JP-A- 2007 184 234
- JP-A- 2007 184 238
- US-A1- 2003 113 616
- US-A1- 2006 073 380

## Description

### TECHNICAL FIELD

The present invention relates to an improvement of a lithium ion battery of the type wherein a wound electrode structure formed by winding a laminate of a tape-form negative electrode and a tape-form positive electrode together with a tape-form separator interposed therebetween is sealed up together with a non-aqueous electrolytic solution within a battery case so as to prevent unwinding of the wound electrode structure, and also an improvement of the wound electrode structure sealed up within such a lithium ion battery.

### BACKGROUND ART

In a lithium ion battery of the type wherein a wound electrode structure formed by winding a laminate of a tape-form negative electrode and a tape-form positive electrode together with a tape-form separator interposed therebetween is sealed up together with a non-aqueous electrolytic solution within a battery case so as to prevent unwinding of the wound electrode structure, there has been generally used an unwinding prevention tape comprising a polyolefin, such as polyethylene and polypropylene, surrounding and adhering to the wound electrode structure as a means for preventing unwinding of the wound electrode structure. The thus-formed wound electrode body is inserted into a battery case having an inside diameter almost exactly fitting about the wound electrode body, and is enclosed in the battery case together with a nonaqueous electrolytic solution subsequently injected therein. In such a use, polyolefin, such as polyethylene, has little affinity to a nonaqueous electrolytic solution and remarkably obstructs the injection of the nonaqueous electrolytic solution into the battery case after the insertion of the wound electrode body to impregnate the wound electrode structure with the nonaqueous electrolytic solution. Moreover, it also impairs the workability of the insertion per se of the wound electrode body into the battery case having an inside diameter close to the outside diameter of the wound electrode body. In order to alleviate the lack of affinity to the nonaqueous electrolytic solution of a polyolefin tape among the above difficulties, it has been proposed to use an unwinding prevention tape coated with polyvinylidene fluoride having a higher affinity to a nonaqueous electrolytic solution (Patent document 1). However, such a coated tape is accompanied with difficulties such that the coating per se becomes difficult since the affinity between the polyvinylidene fluoride as the coating resin and the polyolefin as the tape substrate resin is already poor, and the coating layer is liable to be peeled readily in the process of winding the coated tape around the wound electrode structure and also in contact with the nonaqueous electrolytic solution.

On the other hand, it has been also proposed already to use an unwinding prevention tape comprising vinylidene fluoride resin per se having a good affinity with a nonaqueous electrolytic solution (Patent document 2). In use of a wound electrode body formed by using the tape, the nonaqueous electrolytic solution injected after the insertion thereof can promptly impregnate the wound electrode structure, and also the unwinding prevention tape swells by the impregnation with the nonaqueous electrolytic solution to have an increased thickness so that a somewhat larger gap is permitted between the wound electrode body and the battery case at the time of the insertion of the wound electrode body to the battery case, whereby the insertion work becomes remarkably easier.

However, there has been also found a difficulty with respect to a lithium ion battery including an inserted wound electrode body using such an unwinding prevention tape made of vinylidene fluoride resin. This arises from a trend that demand for improvement in performance of a lithium ion battery becomes extensive, and a use thereof is directed to a power source of an electric tool requiring a large power output per hour. In such a large-power lithium ion battery, as the electrode temperature in use rises to about 90 °C, the unwinding prevention tape not only swells in the nonaqueous electrolytic solution, but also can dissolve therein to cause a remarkable lowering in battery performance.
[Patent document 1] JP-A 2007-184234
[Patent document 2] JP-A 6-181058.

### DISCLOSURE OF INVENTION

Accordingly, a principal object of the present invention is to provide a lithium ion battery having inserted therein a wound electrode body formed by attaching an unwinding prevention tape capable of exhibiting stable unwinding prevention ability even under a high-temperature operating condition to the circumference thereof, and also such a wound electrode body for lithium ion batteries.

With the above-mentioned object, the present inventors have examined various resins, particularly in order to find a thermoplastic resin having good affinity or miscibility with vinylidene fluoride resin, unlike polyolefin, etc. and, as a result thereof, have found that an aromatic polyester resin is the most suited for such an object and that the use of an unwinding prevention tape comprising a composite material (a blend or a laminate) of a vinylidene fluoride resin and an aromatic polyester resin, thus obtained, is very effective in achievement of the above-mentioned object of the present invention. Based on the above finding, the present invention provides a lithium ion battery, comprising : a battery case; and a wound electrode body formed by attaching an unwinding prevention tape to a circumference of a wound electrode structure which is formed by winding a laminate of a tape-form negative electrode and a tape-form positive electrode together with a tape-form separator interposed therebetween, and a non-aqueous electrolytic solution, sealed up together within the battery case; wherein unwinding prevention tape comprises a blend of a vinylidene fluoride resin and an aromatic polyester resin in a weight ratio of 95:5-60:40 or 40:60-5:95, the ratio 40:60 being outside the range 40:60-5:95. The present invention further provides a wound electrode body for a lithium ion battery, formed by attaching an unwinding prevention tape to a circumference of a wound electrode structure which is formed by winding a laminate of a tape-form negative electrode and a tape-form positive electrode together with a tape-form separator interposed therebetween; wherein the unwinding prevention tape comprises a blend of a vinylidene fluoride resin and an aromatic polyester resin, in a weight ratio of 95:5-60:40 or 40:60-5:95, the ratio 40:60 being outside the range 40:60-5:95.

### BRIEF DESCRIPTION OF THE DRAWINGS

Fig. 1 is a partially exploded schematic perspective view of an embodiment of the lithium ion battery of the present invention.
Fig. 2 is a schematic perspective view of an embodiment of the wound electrode body of the present invention.
Figs. 3 to 9 are each a thickness-wise schematic sectional view of an embodiment of the unwinding prevention tape

### [BEST MODE FOR PRACTICING THE INVENTION]

Hereafter, preferred embodiments of the present invention are described in detail, referring to drawings.

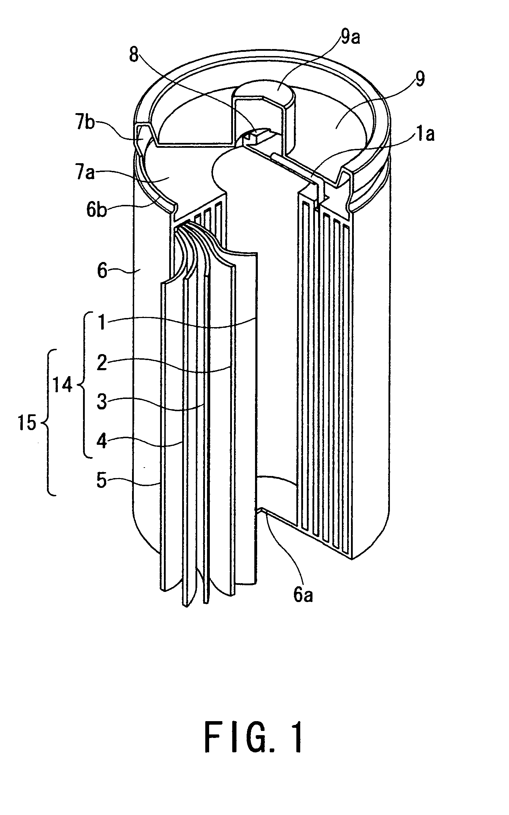

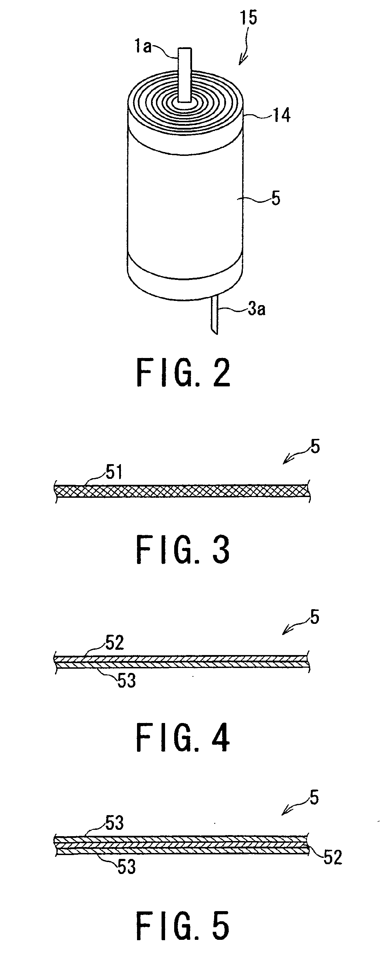

The entire structure of the lithium ion battery formed by the present invention is mostly similar to that of a conventional lithium ion battery including an inserted wound electrode body. Fig. 1 is a partially exploded perspective view thereof. Thus, the lithium ion battery basically has a structure including a wound electrode body 15 formed by attaching an unwinding prevention tape 5 onto a circumference of a wound electrode structure (generator element) 14 which in turn has been formed by winding in a vertex form a laminate of a positive electrode 1, a separator 2, a negative electrode 3 and a separator 4, each in a tape or strip form and disposed in this order, accommodated within a battery case 6 having a bottom (on which an insulating sheet (not shown) has been disposed in advance) functioning as a negative electrode terminal 6a. In the lithium ion battery, the negative electrode 3 is further electrically connected to the negative electrode terminal (battery case bottom) 6a via a negative electrode lead (3a of Fig. 2) which extends piercing through the above-mentioned insulating sheet (not shown) disposed on the bottom, and at the top thereof, a spacer (insulating sheet) 7a, a gasket 7b and a safety valve 8 are disposed, and thereover a top plate (battery lid) 9 having a crown 9a electrically connected to the positive electrode 1 via a positive electrode lead 1a and functioning as a positive electrode terminal is disposed. The entire structure is sealed by crimping a top rim 6b of the battery case 6. Ordinarily, in an intermediate stage where the wound electrode body 15 has been inserted into the battery case 6 and prior to completion of the top structure, a nonaqueous electrolytic solution is injected into and accommodated in the battery case 6 in a form of impregnating the separators 2, 4 and the electrodes 1, 3, in particular.

The positive electrode 1 and the negative electrode 3, may respectively be formed by coating at least one surface of an electroconductive substrate comprising a foil or net of a metal, such as iron, stainless steel, steel, copper, aluminum or nickel and having a thickness of 5 -100 µm, preferably 5 - 20µm, with an electrode-forming slurry composition obtained by mixing an active substance, an optionally added electroconductive aid, such as carbon black, and a solution of a binder such as vinylidene fluoride resin or an emulsion of a rubber-type binder such as SBR (styrene-butadiene rubber), followed by drying at, e.g. 50 - 170°C, to form an electrode layer in a dry thickness of 10 - 1000 µm.

As for active substances for lithium-ion secondary batteries, it is preferred for a positive electrode to use a composite metal chalcogenide represented by a general formula LiMY₂ (wherein M represents at least one species of transition metals, such as Co, Ni, Fe, Mn, Cr, and V; Y represents a chalcogen element, such as O and S), particularly a composite metal oxide, such as a composite metal oxide including those represented by LiNiₓCo₁₋ₓO2 (0<=x<=1) or a composite metal oxide assuming a spinel structure, such as LiMn₂O₄. Moreover, it is also preferred to use a lithium-containing compound having an olivine structure represented by lithium iron phosphate. In the case of a negative electrode, it is possible to use powdery carbonaceous materials, such as graphite, activated carbon and calcination-and-carbonization products of a phenolic resin, pitch, etc., and in addition thereto, metal oxides, such as GeO, GeO₂, SnO, SnO₂, PbO, and PbO_{2,}, and composite metal oxides of these (for example, those disclosed in JP-A 7-249409).

As a nonaqueous electrolytic solution impregnating the separators 2 , 4, etc, it is possible to use a solution of an electrolyte, such as a lithium salt, in a nonaqueous solvent (organic solvent). The electrolyte may, for example, comprise LiPF₆, LiAsF₆, LiClO₄, LiBF₄, CH₃SO₃Li, CF₃SO₃Li, LiCl, LiBr, etc. As organic solvents for electrolytes, it is possible to use, e.g., propylene carbonate, ethylene carbonate, 1,2-dimethoxy ethane, 1,2-diethoxyethane, dimethyl carbonate, diethyl carbonate, ethyl methyl carbonate, gamma-butyrolactone, methyl propionate, ethyl propionate, mixture solvents of these, etc., but these are not exhaustive.

The separators 2 and 4 may comprise a fine porous membrane of polymers, such as polyolefin, and also nonwoven fabric and other porous materials. The thickness is about 10-50 µm, for example.

According to the present invention, to the circumference of a wound electrode structure (power generation element) 14 comprising a laminate formed by alternately winding such electrodes 1, 3 and separators 2, 4, an unwinding prevention tape 5 comprising a composite material of a vinylidene fluoride resin and an aromatic polyester resin is attached, thereby forming a wound electrode body 15. Fig. 2 is a schematic perspective view of an example of such a wound electrode body 15 formed in this way and also shows a positive electrode lead 1a which is an extended portion of the electroconductive substrate of the positive electrode 1 and a negative electrode lead 3a which is an extended portion of the electroconductive substrate of the negative electrode 3. The unwinding prevention tape 5 can be provided with minute perforations (not shown in particular) formed by needle punching etc., so as to promote the penetration of a nonaqueous electrolytic solution. In the present invention, by utilizing the swellability with the nonaqueous electrolytic solution of the composite material of vinylidene fluoride resin and aromatic polyester resin, 1 or 2 turns, particularly 1 turn, of winding can effectively exhibit the unwinding prevention action for the wound electrode structure 14 through a thickness increase owing to swelling after insertion into the battery case and injection of the nonaqueous electrolytic solution, unlike the conventional polyolefin-based unwinding prevention tape having required about 3 turns of winding.

In the above, although an example of a cylindrical cell has been described, but the entire shape of the lithium ion battery of the present invention can also be formed in a rectangular shape as far as it is of an electrode-winding type.

Hereafter, some embodiments of layer structure of the unwinding prevention tape used by the present invention are described with reference to thicknesswise partial schematic sectional views.

According to the present invention, the unwinding prevention tape 5 of the above-mentioned wound electrode body 15 is formed of a blend of vinylidene fluoride resin and aromatic polyester resin. Accordingly, the simplest structure of the unwinding prevention tape 5 used in the present invention consists of a single layer 51 comprising a blend as shown in Fig. 3. Fig. 4-6 illustrate a laminate of vinylidene fluoride resin layer 52 and aromatic polyester layer 53 not according to the invention

Now, vinylidene fluoride resin and aromatic polyester resin which are components of the composite material constituting the unwinding prevention tape, are described.

The vinylidene fluoride resin used in the present invention may be either a homopolymer or a copolymer of vinylidene fluoride. Examples of the vinylidene fluoride copolymer may include: copolymers of vinylidene fluoride with other monomers copolymerizable with the vinylidene fluoride, inclusive of: hydrocarbon monomers, such as ethylene and propylene, and fluorine-containing monomers other than vinylidene fluoride, such as vinyl fluoride, trifluoroethylene, trifluorochloroethylene, tetrafluoroethylene, hexafluoropropylene, and fluoroalkyl vinyl ethers. The copolymer may preferably contain 90 mol % or more, particularly 95 mol % or more, of vinylidene fluoride units.

As for the vinylidene fluoride resin, it is also preferred to copolymerize 100 wt. parts of the above-mentioned monomer(s) providing the homopolymer or copolymer of vinylidene fluoride with 0.1-3 wt. parts of a monomer having at least one adhesive functional group selected from carboxyl group, epoxy group, hydroxyl group and carbonyl group, and copolymerizable with vinylidene fluoride, to provide a vinylidene fluoride (co)polymer modified by introducing such an adhesive functional group. Examples of the carboxyl group-containing monomer may include: unsaturated monobasic acids, such as acrylic acid and crotonic acid, and unsaturated dibasic acids, such as maleic acid and citraconic acid, or mono-alkyl esters thereof. Examples of the epoxy group-containing monomer may include: allyl glycidyl ether, methallyl glycidyl ether, glycidyl crotonate, glycidyl allylacetate, etc. Further, the hydroxyl group-containing monomer may include: hydroxyethyl acrylate, hydroxypropyl acrylate, etc.; and the carbonyl group-containing monomer may include: ethylene carbonate, etc. Such an adhesive functional group-containing monomer is used only in a small amount of 0.1 to 3 wt. parts per 100 wt. parts of vinylidene fluoride (co)polymer-forming monomer having no adhesive functional group, so that it can be subjected to suspension polymerization in an aqueous medium together with the vinylidene fluoride (co)polymer-forming monomer.

Further, in order to improve the heat resistance while maintaining the swellability, it is also preferred to introduce a crosslinking structure to the vinylidene fluoride (co)polymer by a chemical cross-linking method (addition of a polyamine, a polyol or a polyfunctional crosslinking agent, and a radical generator) or a physical cross-linking method (exposure to electron rays or gamma rays).

In the present invention, in consideration of the heat resistance and swellability in the nonaqueous electrolytic solution, it is preferred to use a vinylidene fluoride resin having an inherent viscosity (ηᵢₙₜₕ, referring to a logarithmic viscosity at 30 °C of a solution of 4g of the resin in 1 liter of N, N-dimethylformamide, herein) of 0.8 to 1.3 dl/g, particularly 0.85 - 1.1 dl/g, among the above-mentioned class.

The aromatic polyester resin forming the composite material with the above-mentioned vinylidene fluoride resin means a polyester formed of a diol and a dicarboxylic acid, at least one of which, preferably the dicarboxylic acid, is aromatic. Preferred examples of the aromatic polyester resin may include: polyethylene terephthalate, polybutylene terephthalate, polyethylene naphthalate, and polybutylene naphthalate. Further, in order to improve the affinity with the vinylidene fluoride resin, it is also preferred to replace a portion of the diol with another diol component, such as 1,4-cyclohexanedimethanol (CHDM), or to replace a portion of the carboxylic acid, e.g., terephthalic acid with isophthalic acid, to reduce the crystallinity. However, an excessive replacement should be avoided, since it obstructs the effect of improving the heat resistance of the unwinding prevention tape in the nonaqueous electrolytic solution expected to be attained by use of the aromatic polyester resin. Further, as a measure of the molecular weight of an aromatic polyester resin, IV (intrinsic viscosity) has been generally used, and it is preferred to use an aromatic polyester resin having an IV of 0.6 to 1.4 dl/g, preferably 0.65 to 1.1 dl/g, more preferably 0.7 - 1.0 dl/g for the purpose of the present invention.

In the blend, the mutual solubility of both resins is restricted to some extent, so that a weight ratio of vinylidene fluoride resin : aromatic polyester resin in the range of 40:60-60:40 should be avoided. On the other hand, in order to demonstrate a compositing effect, it is preferred to use a weight ratio of vinylidene-fluoride resin : aromatic polyester resin of 95:5 - 5:95. In order to better enjoy the thickness increase effect by swelling of vinylidene fluoride resin while retaining the heat resistance including both embodiments of the blend and the laminate, the weight ratio of vinylidene fluoride resin : aromatic polyester resin should preferably be in a range of 95:5-60:40, most preferably 95:5-70:30.

The blend embodiment is advantageous in that it allows a simpler tape-manufacturing apparatus; it provides a curl-free unwinding prevention tape; and it can be used without any discrimination between the front and back surfaces.

Including the above-mentioned various embodiments, the unwinding prevention tape may suitably have a total thickness per sheet of about 20-70 µm, preferably about 30-60 µm and can have been stretched uniaxially or biaxially, as desired, for the purpose of , e.g., providing an improved strength and adjusting the thickness.

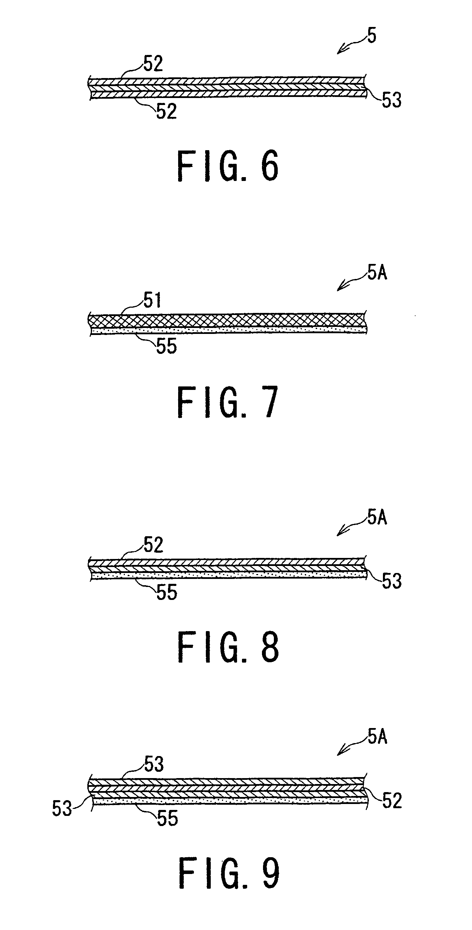

The unwinding prevention tape 5 of the present invention is disposed in attachment to the separator 4 as the outermost layer of the wound electrode structure 14. Accordingly, the unwinding prevention tape 5 can be attached to the circumference of the wound electrode structure 14 to prevent the unwinding of the wound electrode structure 14 by using the sealability of, e.g., polyolefin forming the separator 4 by heat sealing or ultrasonic sealing. More, conveniently, however, it is preferred to apply an adhesive on a surface a layer of the unwinding prevention tape 5 attached to the wound electrode structure 14, to form an adhesion-type unwinding prevention tape. Fig. 7 - Fig. 9 are thickness-wise schematic sectional views of such adhesion-type unwinding prevention tapes 5A formed by disposing a pressure-sensitive adhesive layer 55 on the side (the lower side in the figures) attached to the wound electrode structure 14 of the unwinding prevention tapes of Fig. 3 - Fig. 5, respectively.

Any type of pressure-sensitive adhesive can be used for the layer 55 without restriction, as far as it sticks to the separator layer. For example, it is possible to use various pressure-sensitive adhesives, such as those of polyisoprene base, styrene-butadiene random copolymer base, styrene-isoprene block copolymer base, isobutylene-isoprene rubber base, polyisobutylene base, acrylic resin base, and silicone base. These pressure-sensitive adhesives can be easily obtained as commercial products. Suitable adhesion strength may be selected depending on the material of the separator.

The coating method of applying the pressure-sensitive adhesive coating liquid on the surface of the unwinding prevention tape is not particularly limited, and it is possible to use dipping, spraying, coaters, and printers therefor. Examples of the coater may include: an air knife coater, a blade coater, a reverse roll coater, a gravure coater, a bar coater, etc.

The coating liquid may be dried according to any drying method without particular restriction, inclusive of, e.g., natural drying, a method of using a dryer set to a predetermined temperature, or a method of using an attached dryer for the coater. The drying temperature may, for example, be 50-120 °C in the case of hot-air drying.

Time of drying may be suitably selected depending on the coating method. The pressure-sensitive adhesive layer 55 formed in about 10-30 µm as a dry thickness.

### [Examples]

Hereinbelow, there are shown Examples and Comparative Examples of production and evaluation of the unwinding prevention tape which is a characteristic element of the lithium ion battery and the unwinding prevention tape of the present invention, and Examples of production and evaluation of the wound electrode body and the lithium ion batteries

### <Production Examples and Comparative Examples >

### [Blend type (single layer)]

### (Production Example 1)

90 wt. % of polyvinylidene fluoride having an inherent viscosity (ηinh) =1.0 dl/g ("KF#1000", made by Kureha Corporation) as a vinylidene fluoride resin and 10 wt. % of polybutylene terephthalate ("700FP" made by WinTech Polymer, Ltd.) as an aromatic polyester resin, respectively in pellet form, were blended with each other and extruded through a single screw extruder with an outlet diameter of 40 mm and equipped with a T-die at a die temperature of 280 °C to produce a tape-form film of 250 mm in width and 50 µm in thickness.

### (Production Examples 2 and 3)

Films were obtained similarly as in Production Example 1 except that the blend ratio by weight of polyvinylidene fluoride and polybutylene terephthalate was changed to 70:30 (Production Example 2) and 30:70 (Production Example 3), respectively.

### (Production Example 4)

A single-layer film (250 mm in width and 40µm in thickness) was produced in a similar manner as in Example 1 except for using 95 wt. % of polyvinylidene fluoride (ηinh=1.0 dl/g) and 5 wt. % of aromatic polyethylene terephthalate (PET; "A12", made by Eastman Chemical Co.).

### (Production Example 5)

A single-layer film (250 mm in width and 40µm in thickness) was produced in a similar manner as in Example 1 except for using 90 wt. % of polyvinylidene fluoride (ηinh=1.0 dl/g) and 10 wt. % of aromatic polyethylene terephthalate (PET; "A12", made by Eastman Chemical Co.).

### (Production Example 6)

A single-layer film (250 mm in width and 40µm in thickness) was produced in a similar manner as in Example 1 except for using 80 wt. % of polyvinylidene fluoride (ηinh=1.0 dl/g) and 20 wt. % of aromatic polyethylene terephthalate (PET; "A12", made by Eastman Chemical Co.).

### (Production Example 7)

A single-layer film (250 mm in width and 30 µm in thickness) was produced in a similar manner as in Example 1 except for using 90 wt. % of polyvinylidene fluoride (ηinh=1.0 dl/g) and 10 wt. % of aromatic polyethylene terephthalate (PET; "A12", made by Eastman Chemical Co.).

### (Production Example 8)

A single-layer film (250 mm in width and 50 µm in thickness) was produced in a similar manner as in Example 1 except for using 90 wt. % of polyvinylidene fluoride (ηinh=1.0 dl/g) and 10 wt. % of aromatic polyethylene terephthalate (PET; "A12", made by Eastman Chemical Co.).

### (Comparative Example 1)

A film was obtained in a similar manner as in Production Example 1 except for using a starting material of polyvinylidene fluoride (ηinh=1.0 dl/g) alone.

### (Comparative Examples 2 and 3)

Two type of films were obtained in a similar manner as in Production Example 1 except for using polyvinylidene fluoride (ηinh=1.30 dl/g; "KF#1300", made by Kureha Corporation) (Comparative Example 2) and polybutylene terephthalate ("700EP") (Comparative Example 3), respectively alone.

### [Evaluation]

The unwinding prevention tapes (films) produced in the above-mentioned Examples, were respectively subjected to measurement of heat resistance (visual appearance observation), thickness, rate of thickness increase and rate of weight increase as follows. More specifically, each of the films produced in the above-mentioned Examples, was cut into a 2 cm-wide and 4 cm-long sample, of which the thickness and weight were then measured. Then, in order to provide a situation of contact with a nonaqueous electrolytic solution approximate to that in a battery case, each sample was sandwiched with slide glasses and placed in an autoclave, into which was then injected a mixture of an electrolytic solution (a liquid mixture of ethylene carbonate (EC), propylene carbonate (PC) and dimethyl carbonate (DMC) in volume ratios of 16/8/76) and 1.0 mol/L of LiPF₆ as an electrolyte, and the autoclave was sealed. The autoclave was held for 16 hours in an oven at 90 °Cand taken out after cooling to room temperature. The sample was taken out of the autoclave, after wiping off the attached electrolytic solution, was subjected to visual observation, and measurement of thickness and rate of weight increase.

The thickness measurement was performed by using a planar head gauge (of 8.5 mm in diameter) under a load of 1.5 N. The results of the visual observation were evaluate with the standard of X : Sample caused crack and a large degree of whitening, and O : Sample caused no crack and little whitening.

The outline of the films obtained by the above-mentioned Production Examples and the Comparative Examples, and the outline of the evaluation results, are inclusively shown in the following Table 1.

**[Table 1]**

| Production Example | Swelling material | | Non-swelling material | | Whole thickness | Thickness increase | Weight increase | Visual observation result |
|---|---|---|---|---|---|---|---|---|
| | PVDF *η* inh | Weight Ratio | Aromatic polyester resin | Weight Ratio | | | | |
| | (dl/g) | (%) | | (%) | (*µ*m) | (%) | (%) | |
| 1 | 1.0 | 90 | PBT | 10 | 50 | 188 | 25 | ○ |
| 2 | 1.0 | 70 | PBT | 30 | 50 | 208 | 26 | ○ |
| 3 | 1.0 | 30 | PBT | 70 | 50 | 144 | 26 | ○ |
| 4 | 1.0 | 95 | PET | 5 | 40 | 183 | 27 | ○ |
| 5 | 1.0 | 90 | PET | 10 | 40 | 187 | 25 | ○ |
| 6 | 1.0 | 80 | PET | 20 | 40 | 190 | 26 | ○ |
| 7 | 1.0 | 90 | PET | 10 | 30 | 188 | 25 | ○ |
| 8 | 1.0 | 90 | PET | 10 | 50 | 187 | 25 | ○ |
| Comparative 1 | 1.0 | 100 | | | 40 | 210 | 38 | × |
| Comparative 2 | 1.3 | 100 | | | 40 | 355 | 31 | × |
| Comparative 3 | | | PBT | 100 | 50 | 15 | 10 | ○ |

As a supplementary explanation to the above results, it was confirmed that the films obtained by Production Examples 1-8 were fully swollen while no deterioration in appearance was observed as a result of visual observation. Incidentally, a larger increase in thickness compared with an increase in weight is attributable to the fact that the film caused a deformation which was not a uniform increase in thickness but a wavelike fold. It was also confirmed that the gap between the wound electrode body and the inner wall of the battery case was filled to develop the effect of preventing unwinding of the wound electrode structure.

In contrast to the above, the films of Comparative Examples 1 and 2 consisting of polyvinylidene fluoride alone of ηinh=1.0 dl/g and 1.3 dl/g, respectively, caused remarkable whitening and cracks while they were sufficiently swollen. On the other hand, the film of Comparative Example 3 using polybutylene terephthalate (PBT) alone was very deficient in swellability while caused very little deterioration in appearance, so that no advantage was conceived in comparison with a polyolefin unwinding prevention tape.

### (Production Example 9)

Onto a piece of the film obtained in Production Example 1, a commercially available acrylic pressure-sensitive adhesive ("BPS1109", made by TOYO INK MFG. CO., LTD.) after dilution with toluene so as to provide a dry thickness of 20µm, was applied with a Mayer bar and dried for 30 minutes in a 70 °C dryer to form a film with an adhesion layer. The film was caused to adhere to a commercially available polyethylene-made separator (22µm in thickness; "High Pore S6722", made by Asahi Chemical Co., Ltd.), and the heat resistance in contact with the nonaqueous electrolytic solution of the film-attached separator was visually evaluated according to the above-mentioned evaluation method. As a result, no deterioration in appearance was observed. According to the visual observation, the swelling of the film was also observed, but numerical evaluation thereof was not performed, since exclusion of contribution of the separator and the pressure-sensitive adhesive was very difficult.

### [Laminate type (two layer)] not according to the invention

### (Production Example 10)

Polyvinylidene fluoride (ηinh=1.0 dl/g) as a vinylidene fluoride resin and polybutylene terephthalate ("700FP") as an aromatic polyester resin were extruded so as to provide a thickness ratio of 90:10 through an extruder with outlet diameters of 40 mm and 30 mm and equipped with a two-layer T-die at a die temperature of 270 °C to produce a two-layer film of 250 mm in width and 50 µm in thickness.

### (Production Examples 11 and 12)

Two types of two-layer films were obtained similarly as in Production Example 10 except that the thickness ratio of polyvinylidene fluoride (ηinh=1.0 dl/g) and polybutylene terephthalate ("700FP") was changed to 80:20 (Production Example 11) and 60:40 (Production Example 12), respectively.

### (Production Examples 13 -16)

Four types of two-layer films were produced in a similar manner as in Example 10 except for using polyvinylidene fluoride (ηinh=0.85 dl/g; "KF#850", made by Kureha Corporation) as a vinylidene fluoride resin and aromatic polyethylene terephthalate (PET; "A12", made by Eastman Chemical Co.) as an aromatic polyester resin so as to provide entire thicknesses and thickness ratios as shown in Table 2 appearing hereafter.

### (Production Example 17)

A two-layer film was obtained similarly as in Production Example 10 except for using a 70:30 wt.%-ratio mixture of the polyvinylidene fluoride (ηinh=1.0 dl/g) and the polybutylene terephthalate (PBT,"700FP") used in Production Example 1 for providing a swelling layer and a 30:70 wt.%-ratio mixture of the same polyvinylidene fluoride and polybutylene terephthalate for providing a non-swelling layer so as to provide a thickness ratio of 60 % of the swelling layer and 40 % of the non-swelling layer

### (Production Example 18)

A two-layer film was obtained similarly as in Production Example 10 except for using a 70:30 wt.%-ratio mixture of the polyvinylidene fluoride (ηinth=0.85 dl/g) and the PET ("A12") used in Production Example 13 for providing a swelling layer and 100 % of the same PET ("A12") alone for providing a non-swelling layer so as to provide a thickness ratio of 50 % of the swelling layer and 50 % of the non-swelling layer.

### (Comparative Example 4)

A two-layer film was obtained in a similar manner as in Production Example 10 except using polymethyl methacrylate (PMMA; "HBY-N19", made by Mitsubishi Rayon Co., Ltd.) instead of PBT.

### (Comparative Example 5)

A two-layer film was obtained in a similar manner as in Production Example 10 except for using polypropylene (PP; "NOVATEC FY6H", made by Japan Polypropylene Corporation) instead of PBT.

The outline the two-layer films obtained by the above-mentioned Production Examples and the Comparative Examples and the results of evaluation thereof according to a contact standing test with an electrolytic solution performed similarly as the single-layer films, are inclusively shown in the following Table 2.

**[Table 2]**

| Production Example | Swelling material | | | Non-swelling material | | | Whole Thickness | Thickness increase | Weight increase | Visual observation result |
|---|---|---|---|---|---|---|---|---|---|---|
| | PVDF *η* inh | Two-layer Ratio | Blend Ratio | Material | Two-layer Ratio | Blend Ratio | | | | |
| | (dl/g) | (%) | (%) | | (%) | (%) | (*µ*m) | (%) | (%) | |
| 10 | 1.0 | 90 | | PBT | 10 | | 50 | 219 | 25 | ○ |
| 11 | 1.0 | 80 | | PBT | 20 | | 50 | 189 | 24 | ○ |
| 12 | 1.0 | 60 | | PBT | 40 | | 50 | 186 | 21 | ○ |
| 13 | 0.85 | 90 | | PET | 10 | | 45 | 174 | 33 | ○ |
| 14 | 0.85 | 93 | | PET | 7 | | 45 | 133 | 38 | ○ |
| 15 | 0.85 | 90 | | PET | 10 | | 35 | 247 | 49 | ○ |
| 16 | 0.85 | 90 | | PET | 10 | | 55 | 157 | 33 | ○ |
| 17 | 1.0 | 60 | *1 | PBT | 40 | *2 | 50 | 195 | 26 | ○ |
| 18 | 1.0 | 50 | *3 | PET | 50 | *4 | 50 | 81 | 36 | ○ |
| Comparative 4 | 1.0 | 90 | | PMMA | 10 | | 50 | 205 | 31 | × |
| Comparative 5 | 1.0 | 90 | | PP | 10 | | 50 | 210 | 25 | × |

| | | | | | | | | | | |
|---|---|---|---|---|---|---|---|---|---|---|
| *1 Blend ratio in the swlling layer was PVDF (1.0) :P BT=70:30 (by weight). *2 Blend ratio in the non-swlling layer was PVDF (1.0) :P BT=30:70 (by weight). *3 Blend ratio in the swlling layer was PVDF (0.85) :P ET=70:30 (by weight). *4 The non-swelling layer was PET100%.. | | | | | | | | | | |

As a supplementary explanation to the results in the above Table 2, it was confirmed that the films obtained by Production Examples 10 - 17 all exhibited sufficient swellability with very little deterioration in appearance. The film of Production Example 18 having a non-swelling PET layer in a thickness ratio of 50 % exhibited a low swellability which was however in a tolerable range. The two-layer film of Comparative Example 4 using polymethyl methacrylate (PMMA) instead of aromatic polyester resin showed a swellability with respect to a nonaqueous electrolytic solution, but caused remarkable whitening and also cracks, thus failing to achieve an improvement in heat resistance compared with a single layer of vinylidene fluoride resin alone (Comparative Example 1). Further, the film of Comparative Example 5 using polypropylene (PP) instead of aromatic polyester resin showed no or very weak adhesion at the boundary with PVDF, so that it caused peeling between the layers during the preparation and handling (such as cutting and lamination) thereafter, thus showing very poor workability and unsuitability for commercial use.

### <<Production and Evaluation of wound electrode body and lithium ion battery>>

### (Example 1)

A wound electrode body and a lithium ion battery including a single layer-type unwinding prevention tape, of which outlines are as shown in Fig. 2 and Fig. 1, were produced.

[Preparation of a negative electrode] Petroleum pitch was used as a starting material and subjected to introduction of 10-20 wt. % of a functional group containing oxygen (so-called oxygen crosslinkage) and calcination at 1000 °C while flowing an inert gas stream to obtain a nearly glassy carbon, which showed a (002) plane spacing of 3.76A as a result of X-ray diffraction measurement and a true specific gravity of 1.58 g/cm³ as measured by a picnometer. The carbon material was pulverized to obtain a powdery carbon material with a mean particle diameter of 10 µm, which was used as a negative-electrode active material. Then, 10 wt. parts of polyvinylidene fluoride as a binder was mixed with 90 wt. parts of the powdery carbon material to form a negative electrode mixture, which was then dispersed in N-methyl-pyrrolidone as a solvent to form a paste-like slurry. The negative electrode mixture slurry was applied onto both sides of a 10 µm-thick tape-form copper foil as an electroconductive substrate, and dried and compressed to provide a tape-form negative electrode 3. The thus-formed negative electrode mixtures on both sides had an equal thickness of 80 µm, and the electrode had a width of 58 mm and a length of 700 mm. A nickel-made negative electrode lead 3a was welded to the electroconductive substrate of the negative electrode.

[Preparation of a positive electrode] For preparation of a positive electrode, 0.5 mol of lithium carbonate and 1 mol of cobalt carbonate were mixed with each other and calcinated in air at 900 °C for 5 hours, to obtain LiCoO₂ as a positive electrode active material. Then, 91 wt. parts of the LiCoO₂ was mixed with 6 wt. parts of graphite as an electroconductive substance and 3 wt. parts of polyvinylidene fluoride as a binder to form a positive electrode mixture, which was then dispersed in N-methyl-pyrrolidone was to provide a paste-like positive electrode mixture slurry.

The positive electrode mixture slurry was applied uniformly onto both sides of a 20µm-thick tape-form aluminum foil as an electroconductive substrate, dried to form a tape-form positive electrode 1. The positive electrode mixture on both sides had an equal thickness of 80µm, and the electrode had a width of 57 mm and a length of 650 mm. An aluminum-made positive electrode lead 1a was welded to the positive electrode conductive substrate.

[Preparation of a wound electrode structure] The tape-form negative electrode 3, the tape-form positive electrode 1, respectively formed above, and a pair of separators 2 and 4 each consisting of a fine porous polypropylene film of 60 mm in width, 900 mm in length and 15 µm in thickness, were laminated in the order of the negative electrode 3, the separator 2, the positive electrode 1 and the separator 4, and wound spirally about a core in a large number of turns, to form a vortex-form wound electrode structure 14. The wound electrode structure had an inner diameter about a hollow part (formed by withdrawing the core) of 3.5 mm and an outer diameter of 17 mm.

[Fixation of an electrode] To the entirety of the outermost circumference of the thus-formed wound electrode structure, an adhesion-type unwinding prevention tape having a 20µm-thick acrylic pressure-sensitive-adhesive layer like the one in Production Example 9 on a film formed in a similar manner as in Production Example 1 of 50µm in thickness, 60 mm in width and 65 mm in length, was wound about one turn and attached.

[Injection of an electrolytic solution] The thus-formed wound electrode body was stored in a battery case 6 made of nickel-plated iron, while disposing an insulating sheet below and above the wound electrode structure. A negative electrode lead 3a drawn from the negative electrode's electroconductive substrate was welded to the base 6a of the battery case, and a positive electrode lead 1a drawn from the positive electrode's electroconductive substrate was welded to the projection part of the metal safety valve 8. Subsequently, a nonaqueous electrolytic solution formed by dissolving LiPF₆ at a concentration of 1 mol/L into solvent propylene carbonate was injected into the battery case. Within 1 hour after the injection, the adhesive tape had already been fully swollen.

Then, the battery case, a safety valve 8 and a metal-made battery lid 9, were respectively crimped via a gasket 7b of which the surface had been coated with asphalt to seal up the battery case 6, thereby forming a cylindrical nonaqueous electrolyte lithium secondary battery of 18 mm in diameter and 65 mm in height.

[Charging of the battery] The thus-produced lithium secondary battery was subjected to a charge-discharge test under the following conditions. That is, the charge conditions were set so as to effect a charging at a constant current of one-hour rate (1C, corresponding to an actual current of 2400 mA) and at a constant maximum voltage of 4.2 V in an environment of 23 °C. The discharge conditions were set so as to effect a discharging at a current of 1C down to a voltage of 2.7 V in an environment of 23 °C.

[Confirmation of effect] The battery was further held in an oven at 90 °C for 16 hours, and was then cooled to room temperature. Thereafter, the battery was subjected to a charge-discharge test under the same conditions as described above.

The battery was disassembled after the completion of the charge-discharge test, and observed with eyes. As a result, it was confirmed that the adhesion tape was contracted and deformed, but still held the electrodes with no crack etc.

### (Example 2) not according to the invention

An unwinding prevention tape and a lithium ion battery are produced in a similar manner as in the above-mentioned Example 1 except for using a tape formed by processing the laminate film prepared in Production Example 10 to provide an adhesiveness on the PBT side of the film in a similar manner as in Production Example 9, and the battery was then subjected to the charge-discharge test, the standing at high temperature, the disassembly and the visual observation, similarly as in Example 1.

### [INDUSTRIAL APPLICABILITY]

As described above, according to the present invention, there is provided an unwinding prevention tape of a blend obtained by combining a vinylidene fluoride resin having swellability with a nonaqueous electrolytic solution and an aromatic polyester resin having good heat resistance and good affinity with the vinylidene fluoride resin. The unwinding prevention tape is attached and fixed onto a wound electrode structure to form a wound electrode body, which was sealed up together with an electrolytic solution within a battery case to provide a lithium ion battery which can stably prevent the unwinding of the wound electrode structure and a decrease of power even under a high-temperature service condition as encountered in a large-power use. Such wound electrode body for the lithium ion battery is also provided.

## Claims

1. A lithium ion battery, comprising : a battery case; and a wound electrode body formed by attaching an unwinding prevention tape to a circumference of a wound electrode structure which is formed by winding a laminate of a tape-form negative electrode and a tape-form positive electrode together with a tape-form separator interposed therebetween, and a non-aqueous electrolytic solution, sealed up together within the battery case; wherein said unwinding prevention tape comprises a blend of a vinylidene fluoride resin and an aromatic polyester resin in a weight ratio of 95:5-60:40 or 40: 60-5:95, the ratio 40:60 being outside the range 40:60-5:95.

2. A lithium ion battery according to Claim 1, wherein said unwinding prevention tape is attached to the wound electrode structure via a pressure-sensitive adhesive layer.

3. A lithium ion battery according to Claim 1 or 2, wherein said unwinding prevention tape comprises the vinylidene fluoride resin and the aromatic polyester resin at a weight ratio of 95:5-60:40.

4. A wound electrode body for lithium ion battery,
comprising: a wound electrode structure formed by winding a laminate of a tape-form negative electrode and a tape-form positive electrode together with a tape-form separator interposed therebetween, and an unwinding prevention tape attached to a circumference of the wound electrode structure; wherein said unwinding prevention tape comprises a blend of a vinylidene fluoride resin and an aromatic polyester resin in a weight ratio of 95:5-60:40 or 40:60-5:95, the ratio 40:60 being outside the range 40:60-5:95.

## Patentansprüche

1. Lithiumionenbatterie, umfassend: ein Batteriegehäuse; sowie einen gewickelten Elektrodenkörper, gebildet durch Anbringen eines Bands zur Vorbeugung gegen Abwickeln an einem Umfang einer gewickelten Elektrodenstruktur, die gebildet wird durch Wickeln eines Laminats aus einer Negativelektrode in Bandform und einer Positivelektrode in Bandform, gemeinsam mit einem dazwischen eingeschobenen Separator in Bandform, sowie eine nichtwässrige Elektrolytlösung, die zusammen innerhalb des Batteriegehäuses versiegelt sind; wobei das Band zur Vorbeugung des Abwickelns ein Gemisch aus einem Vinylidenfluoridharz und einem aromatischen Polyesterharz in einem Gewichtsverhältnis von 95:5-60:40 oder 40:60-5:95 umfasst, wobei das Verhältnis 40:60 außerhalb des Bereichs von 40:60-5:95 liegt.

2. Lithiumionenbatterie gemäß Anspruch 1, wobei das Band zur Vorbeugung gegen Abwickeln an der gewickelten Elektrodenstruktur über eine druckempfindliche Klebeschicht angebracht ist.

3. Lithiumionenbatterie gemäß Anspruch 1 oder 2, wobei das Band zur Vorbeugung gegen Abwickeln das Vinylidenfluoridharz und das aromatische Polyesterharz in einem Gewichtsverhältnis von 95:5-60:40 umfasst.

4. Gewickelter Elektrodenkörper für eine Lithiumionenbatterie, umfassend: eine gewickelte Elektrodenstruktur, die gebildet wird durch Wickeln eines Laminats aus einer Negativelektrode in Bandform und einer Positivelektrode in Bandform zusammen mit einem dazwischen eingeschobenen Separator in Bandform, sowie ein Band zur Vorbeugung gegen Abwickeln, das an einem Umfang der Wickelelektrodenstruktur angebracht ist; wobei das Band zur Vorbeugung gegen Abwickeln ein Gemisch aus einem Vinylidenfluoridharz und einem aromatischen Polyesterharz in einem Gewichtsverhältnis von 95:5-60:40 oder 40:60-5:95 umfasst, wobei das Verhältnis 40:60 außerhalb des Bereichs von 40:60-5:95 liegt.

## Revendications

1. Batterie lithium-ion, comprenant : un boîtier de batterie ; et un corps constitué d'électrodes enroulées formé en fixant un ruban anti-déroulement sur la circonférence d'une structure d'électrodes enroulées qui est formée en enroulant un stratifié constitué d'une électrode négative de type ruban et d'une électrode positive de type ruban avec un séparateur de type ruban interposé entre les deux, et une solution électrolytique non aqueuse, scellés ensemble dans le boîtier de batterie ; dans laquelle ledit ruban anti-déroulement comprend un mélange de résine fluorure de vinylidène et de résine polyester aromatique dans un rapport en poids de 95:5-60:40 ou de 40:60-5:95, le rapport 40:60 étant en-dehors de la plage 40:60-5:95.

2. Batterie lithium-ion selon la revendication 1, dans laquelle ledit ruban anti-déroulement est fixé à la structure d'électrodes enroulées par l'intermédiaire d'une couche adhésive sensible à la pression.

3. Batterie lithium-ion selon la revendication 1 ou 2, dans laquelle ledit ruban anti-déroulement comprend la résine fluorure de vinylidène et la résine polyester aromatique dans un rapport en poids de 95:5-60:40.

4. Corps constitué d'électrodes enroulées pour batterie lithium-ion, comprenant : une structure d'électrodes enroulées formée en enroulant un stratifié constitué d'une électrode négative de type ruban et d'une électrode positive de type ruban avec un séparateur de type ruban interposé entre les deux, et un ruban anti-déroulement fixé sur la circonférence de la structure d'électrodes enroulées ; dans lequel ledit ruban anti-déroulement comprend un mélange de résine fluorure de vinylidène et de résine polyester aromatique dans un rapport en poids de 95:5-60:40 ou de 40:60-5:95, le rapport 40:60 étant en-dehors de la plage 40:60-5:95.
